# EUROPEAN PATENT SPECIFICATION

(11) **EP 2 465 718 B1**
(45) Date of publication and mention of the grant of the patent: **19.02.2014**
(21) Application number: 11189368.1
(22) Date of filing: 16.11.2011
(51) Int. Cl.: B60J 7/06

(54) **Sliding roof, particularly for lorries, semitrailers and the like, with carriages made of extruded aluminium alloy**
Schiebedach, insbesondere für Lastkraftwagen, Sattelauflieger und dergleichen, mit einem Gestell aus einer extrudierten Aluminiumlegierung
Toit coulissant, en particulier pour des camions, semi-remorques et similaires, avec des chariots en alliage d'aluminium extrudé

(30) Priority: 17.12.2010 IT TO20101010
(43) Date of publication of application: 20.06.2012
(73) Proprietor: Nordauto Torino S.r.l., 10040 Val Della Torre (Torino) (IT)
(72) Inventor: Bracchino, Mario, 10040 Val della Torre (Torino) (IT)
(74) Representative: Rondano, Davide

(56) References cited:
- EP-A1- 0 778 169
- DE-A1-102005 028 538
- DE-U1- 9 312 295
- DE-U1- 29 700 177
- DE-U1- 29 724 563
- DE-U1- 29 815 722
- DE-U1-202005 005 584

## Description

The present invention relates to a sliding roof, particularly for lorries, semitrailers and the like, and more specifically to the structure of the carriages of such a roof.

As is known, the sliding roofs used on lorries, semitrailers and the like typically comprise a pair of guide sections arranged parallel to each other so as to define a sliding direction, a plurality of cross-members mounted on the guide sections so as to be able to slide along the sliding direction, and a tarpaulin secured to the cross-members. As far as the cross-members are concerned, a distinction is made between end cross-members and intermediate cross-members. The front end cross-member, simply referred to as the foremost cross-member, and the rear end cross-member, simply referred to as the rearmost cross-member, are configured each to perform the double function of securing the tarpaulin and of locking the roof in the closed condition. The intermediate cross-members are on the other hand configured to perform only the function of securing the tarpaulin. Each cross-member, be it an intermediate cross-member or an end cross-member, is guided along the guide sections by means of a respective pair of guide carriages, simply referred to as carriages, to which the opposite ends of the same cross-member are secured. Hereinafter, the carriages associated to the end cross-members will be referred to as end carriages, whereas the carriages associated to the intermediate cross-members will be referred to as intermediate carriages. An element usually known as link is arranged between each pair of adjacent intermediate carriages and comprises a pair of rigid legs, each hinged at a first end thereof (distal end) to a respective intermediate carriage, and an elastically deformable middle portion to which the second ends (proximal ends) of the legs are connected, the legs and the middle portion of the link being configured in such a manner that, as a result of two adjacent intermediate carriages moving towards each other, the middle portion, along with the proximal ends of the two legs, is raised relative to the guide section and the link takes an inverted V-shape configuration. Likewise, a respective link having the same structure as that of the links interposed between pairs of adjacent intermediate carriages is arranged between each end carriage and the adjacent intermediate carriage.

The carriages are particularly critical components of the sliding roof. On the one hand, they are the components through which the tarpaulin is anchored to the guide sections, and hence to the structure of the lorry or of the semitrailer, and they must therefore be so strong as not to break as a result of the stresses applied on them for instance in case of strong wind or in case of snow drift on the tarpaulin. On the other hand, they must be low-cost components, so as not to affect negatively the overall cost of the sliding roof. Nowadays, the carriages are made either of steel, in which case they consist of several pieces joined to each other by welding, with resulting high manufacturing costs, or of plastic material, in which case the carriages are not able to ensure an acceptable mechanical strength.

A sliding roof according to the preamble of the independent claim 1 is known from DE 20 2005 005584 U1.

It is an object of the present invention to provide a sliding roof of the above-identified type, the carriages of which have a high mechanical strength and a reduced weight and at the same time can be manufactured at a low cost.

This and other objects are fully achieved according to the present invention by virtue of a sliding roof, particularly for lorries, semitrailers and the like, having the features set forth in the characterizing part of independent claim 1.

Advantageous embodiments of the present invention are specified in the dependent claims, the content of which is to be regarded as an integral and integrating part of the following description.

In short, the invention is based on the idea of providing a sliding roof in which each carriage has a body which is made of extruded aluminium alloy, and more specifically which comprises a first piece of extruded aluminium alloy having a first extrusion direction, a second piece of extruded aluminium alloy having a second extrusion direction and fixing means for fixing the first piece and the second piece to each other, wherein in the mounted condition of the sliding roof the first extrusion direction is oriented parallel to the sliding direction of the carriages along the guide sections and the second extrusion direction is oriented perpendicular to the sliding direction, i.e. perpendicular to the first extrusion direction.

By virtue of the use of pieces of extruded aluminium alloy for the manufacturing of the bodies of the carriages, these have high mechanical strength and reduced weight and can at the same time be manufactured at a low cost.

According to a preferred embodiment, the aforesaid fixing means are releasable fixing means, in particular screw connection means. In this case, the screw connection means are advantageously used to join one or more further components of the carriage, such as for instance guide bearings, with the assembly formed by the two pieces of extruded aluminium alloy. A reduction in the overall number of components, and hence in the manufacturing costs, of the carriages is thus obtained.

Further features and advantages of the present invention will appear from the following detailed description, given purely by way of non-limiting example with reference to the appended drawings, in which:
Figures 1 and 2 are perspective views which partially show, from different points of view, a sliding roof according to a preferred embodiment of the present invention;
Figures 3 and 4 are a plan view from above and a side elevation view, respectively, of an intermediate carriage of the sliding roof of Figures 1 and 2;
Figure 5 is a section view of an intermediate carriage taken through the section line V-V of Figure 4;

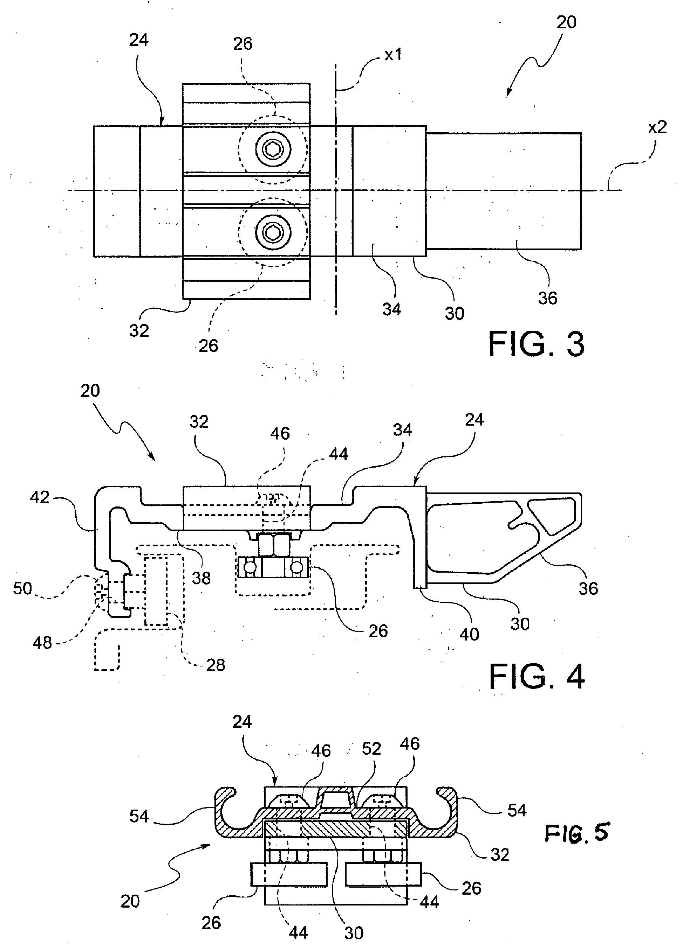

Figure 5 is a side elevation view of a first piece of extruded aluminium alloy of the intermediate carriage of Figures 3 and 4;

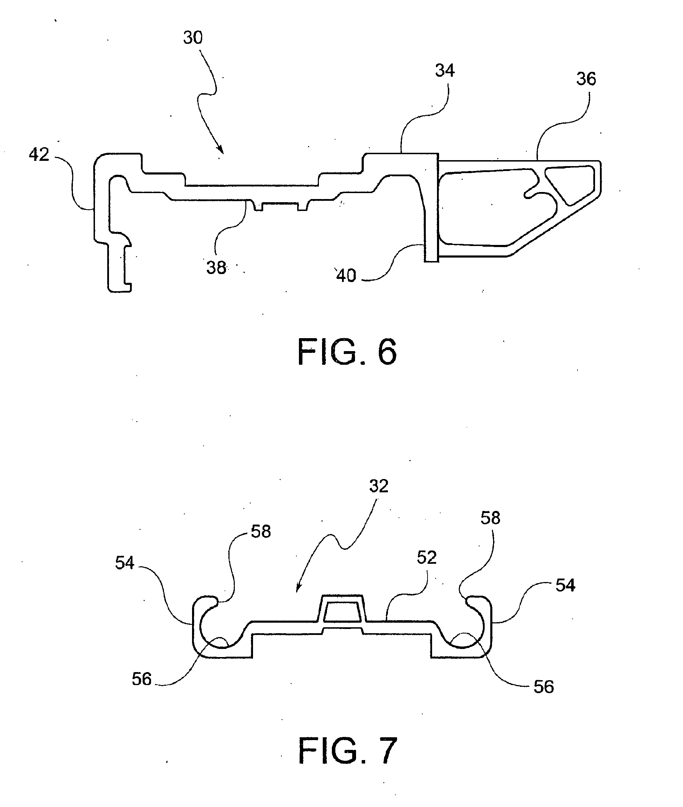

Figure 7 is a side elevation view of a second piece of extruded aluminium alloy of the intermediate carriage of Figures 3 and 4; and

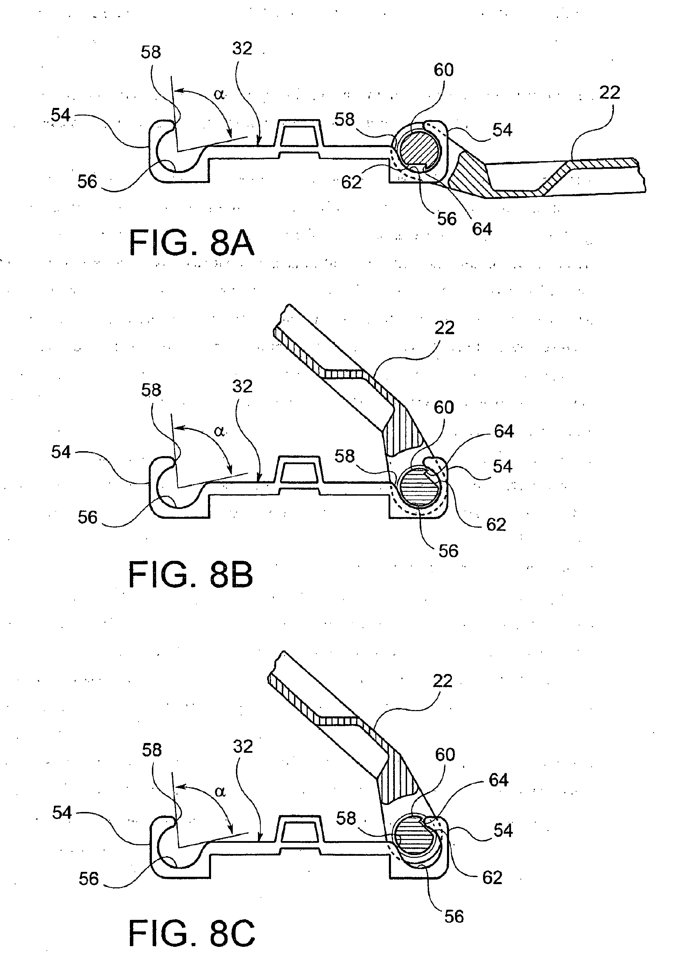

Figures 8A to 8C are section views showing, in three different working positions, the hinged connection between the link and the second piece of the intermediate carriage of Figures 3 and 4.

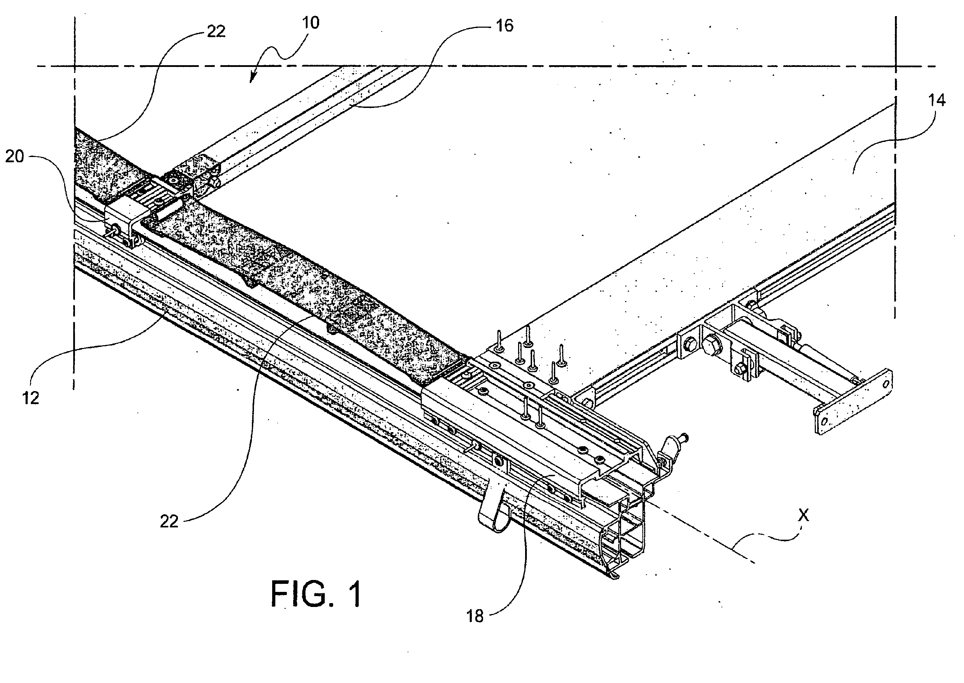

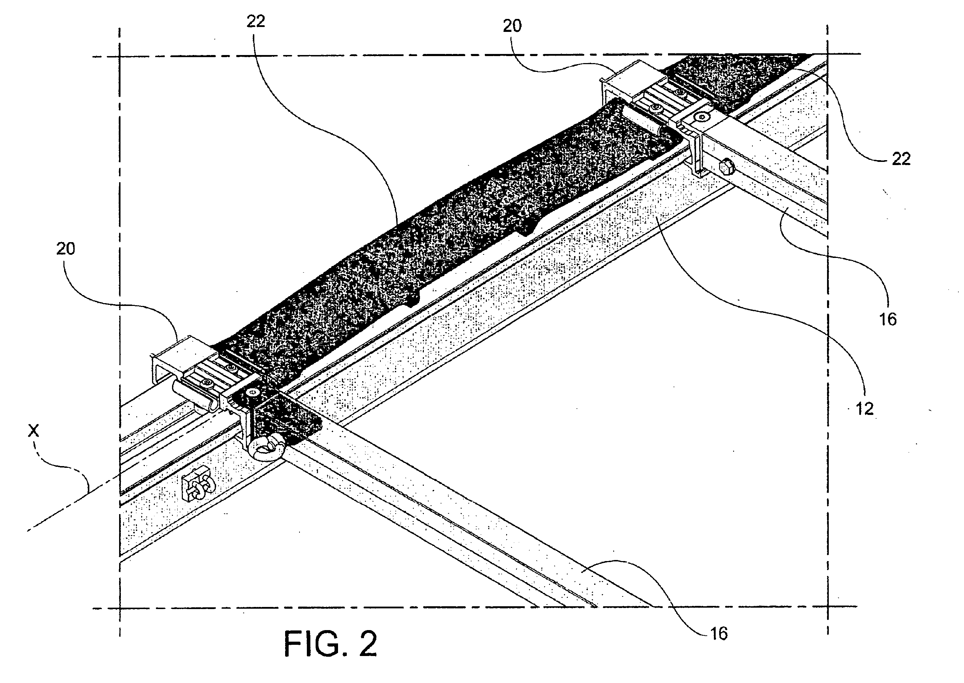

With reference first to Figures 1 and 2, a sliding roof according to a preferred embodiment of the present invention is generally indicated 10 and basically comprises:
a pair of guide sections 12 (only one of which is shown in Figures 1 and 2) arranged parallel to each other so as to define a sliding direction x (which, in case of a sliding roof installed on a lorry or semitrailer, is parallel to the longitudinal direction, i.e. the front-rear direction, of the lorry or semitrailer),
a plurality of cross-members 14, 16 (end cross-members 14 and intermediate cross-members 16) mounted on the guide sections 12 so as to be able to slide along the sliding direction x, and
a tarpaulin (which is of per-se-known type and which is not shown in Figures 1 and 2 in order to allow to better understand the invention) secured to the cross-members 14, 16.

The rear end cross-member 14, hereinafter simply referred to as the rearmost cross-member 14, is configured to perform the double function of securing the tarpaulin and of locking the sliding roof. On the other hand, the intermediate cross-members 16 are configured to perform only the function of securing the tarpaulin. Figure 1 partially shows the rearmost cross-member 14 and the intermediate cross-member 16 adjacent thereto, viewed from the outside of the sliding roof, whereas Figure 2 partially shows two adjacent intermediate cross-members 16, viewed from the inside of the sliding roof. It is clear that the following description relating to the intermediate cross-members shown in Figures 1 and 2 is applicable to all the intermediate cross-members, as well as to the end cross-members, forming part of the sliding roof. Likewise, the following description relating to the rearmost cross-member shown in Figure 1 is applicable to the foremost cross-member either.

The rearmost cross-member 14 is fixed at its opposite ends to a pair of guide carriages 18, usually referred to as rearmost carriages, which are slidably arranged along the guide sections 12 to allow the rearmost cross-member 14 to move in the sliding direction x. Likewise, each intermediate cross-member 16 is fixed at its opposite ends to a respective pair of guide carriages 20, usually referred to as intermediate carriages, which are slidably arranged along the guide sections 12 to allow the intermediate cross-members 16 to move in the sliding direction x. A respective link 22 is arranged between each pair of adjacent intermediate carriages 20, as well as between the rearmost carriage 18 and the intermediate carriage 20 adjacent thereto (and, in a manner not shown, between the foremost carriage and the intermediate carriage adjacent thereto). Each link 22 is preferably made of plastic material and is hinged at its opposite ends to the two carriages between which it is interposed. As far as the shape of the links 22 is concerned, reference is made to the explanation provided in the introductory part of the description of the present application.

With reference now in particular to Figures 2 to 7, the structure of the intermediate carriages 20 will be described, it being understood that what will be explained here below in connection with the intermediate carriages 20 is applicable as such (if not otherwise specified) to the end carriages (rearmost carriage 18 and foremost carriage).

Each intermediate carriage 20 comprises a body 24 and a plurality of guide bearings 26, 28 by means of which the body 24 is slidably supported along the respective guide section 12 and is also restrained to the respective guide section 12.

More specifically, the body 24 comprises a first piece 30 of extruded aluminium alloy having a first extrusion direction x1 (Figure 3) and a second piece 32 of extruded aluminium alloy having a second extrusion direction x2 (Figure 3). In the mounted condition, the first piece 30 is arranged with its extrusion direction x1 parallel to the sliding direction x, whereas the second piece 32 is arranged with its extrusion direction x2 perpendicular to the sliding direction x, and hence perpendicular to the first extrusion direction x1.

The first piece 30 integrally forms a first portion 34 with a substantially inverted U-shape, to which the guide bearings 26, 28 are fixed, and a second portion 36 arranged to be fixed (for instance by means of screw fixing members) to the end of the respective intermediate cross-member 16. The first portion 34 comprises a horizontal middle wall 38 (hereinafter simply referred to as middle wall) and a pair of vertical side walls 40 and 42 (hereinafter simply referred to as side walls), namely an inner side wall and an outer side wall, respectively, which extend downwards from opposite edges of the middle wall 38 which are parallel to the first extrusion direction x1. The middle wall 38 has a pair of holes 44 for insertion of respective screws 46, which serve both for fixing of the two pieces 30 and 32 to each other and for fixing of the guide bearings 26, which comprise each an idle roller rotatable about a vertical axis of rotation, to the assembly formed by the first and second pieces. Likewise, the outer side wall 42 has a pair of holes 48 (only one of which is shown in Figure 4) for insertion of respective screws 50 for fixing of the guide bearings 28, which comprise each an idle roller rotatable about a horizontal axis of rotation. In the mounted condition, as can be seen for instance in Figure 4, the rollers of the guide bearings 26 and 28 are arranged so as to roll along respective rolling surfaces of the guide sections 12. The second portion 36 is arranged adjacent to the inner side wall 40 of the first portion 34.

The second piece 32 integrally forms a horizontal middle wall 52 (hereinafter simply referred to as middle wall), which in the mounted condition of the intermediate carriage rests on the middle wall 38 of the first piece 30, and a pair of connecting portions 54 which extend on opposite sides of the middle wall 52 and are suitably shaped so as to form respective seats 56 for hinged connection with the links 22. Naturally, as far as the end carriages are concerned, the second piece comprises one connecting portion only, since each of these carriages is connected to one link only.

With reference now to Figures 8A to 8C either, the connecting portions 54 of the second piece 32 have each a slit 58 which communicates with the respective seat 56 and is shaped so as to allow snap insertion of respective hinge pins 60 integrally formed by the links 22 and to allow the hinge pins to be released only in a given angular position of the hinge pins different from the positions normally taken in use. More specifically, the slit 58 has an opening angle α less than 180 degrees and the hinge pin 60 has a cross-section the outline of which is not wholly circular, but has a flat portion 62 and a step 64 joining the flat portion 62 to the remaining circular outline of the hinge pin. The slit 58 is oriented in such a manner that the bisecting line of the opening angle α of this slit is inclined by an acute angle towards the inside of the second piece 32 relative to the vertical direction. The flat portion 62 of the hinge pin 60 is oriented substantially parallel to the respective rigid leg of the link 22, whereby as long as the link rotates about the axis of the hinge pin between a horizontal position (Figure 8A) and a position (not shown) inclined less than 90 degrees relative to the horizontal direction, the hinge pin 60 remains engaged in the seat 56, since the size of the hinge pin in a direction perpendicular to the disengagement direction along which the pin is pulled out through the slit 58 (wherein said disengagement direction substantially coincides with the direction of the bisecting line of the opening angle α) is larger than the width of the same slit. In normal operating conditions, a hinged connection between the links and the carriages is therefore ensured. In order to disconnect a link from the respective carriage, the link must be rotated more than 90 degrees relative to the horizontal direction (as shown in Figure 8B), until the flat portion 62 of the hinge pin 60 is arranged approximately parallel to the above-defined disengagement direction. In this position, the hinge pin 60 can be pulled out of the seat 56 through the slit 58, as shown in Figure 8C.

As already explained above, by virtue of the bodies of the carriages being formed by pieces of extruded aluminium alloy, they have a high mechanical strength, which is higher than that of the carriages made of plastic material, and can at the same time be manufactured at a low cost, which is lower than the manufacturing cost of the carriages having a steel body. Moreover, the carriages according to the invention have a lower weight than that of the carriages having a steel body. Furthermore, by virtue of the fixing means being releasable fixing means and being used for fixing one or more further components of the intermediate carriages, a reduction in the overall number of components, and hence of the manufacturing costs, of the intermediate carriages, is obtained.

Naturally, the principle of the invention remaining unchanged, the embodiments and the constructional details may vary widely from those described and illustrated purely by way of non-limiting example.

Clearly, the sliding roof of the present invention is applicable not only to lorries, semitrailers and the like, but also to containers, swap bodies, wagons and any other kind of container for rail transport.

## Claims

1. Sliding roof (10), particularly for lorries, semitrailers and the like, comprising a pair of guide sections (12) arranged parallel to each other so as to define a sliding direction (x), a plurality of cross-members (14, 16) mounted on the guide sections (12) so as to be slidable along the sliding direction (x), and a tarpaulin secured to the cross-members (14, 16), wherein to the opposite ends of each cross-member (14, 16) there are attached a pair of carriages (18, 20) by means of which the cross-member (14, 16) is guided along the guide sections (12), wherein each carriage (18, 20) comprises a body (24) and a plurality of guide bearings (26,28) carried by the body (24),
**characterized in that** the body (24) of each carriage (18, 20) comprises a first piece (30) of extruded aluminium alloy having a first extrusion direction (x1), a second piece (32) of extruded aluminium alloy having a second extrusion direction (x2), and fixing means (46) for fixing the first piece (30) and the second piece (32) to each other, and **in that** the first and second pieces (30, 32) are arranged in such a manner that the first extrusion direction (x1) is oriented parallel to the sliding direction (x), whereas the second extrusion direction (x2) is oriented perpendicular to the sliding direction (x).

2. Sliding roof according to claim 1, wherein the first piece (30) of each carriage (18, 20) integrally forms a first portion (34) which has substantially an inverted U-shape and to which the guide bearings (26, 28) are fixed, and a second portion (36) which is fixed to an end of the respective cross-member (14, 16).

3. Sliding roof according to claim 2, wherein the first portion (34) comprises a horizontal middle wall (38) and a pair of vertical side walls (40, 42), that is to say, an inner vertical side wall and an outer vertical side wall, respectively, which extend downwards from opposite sides of the horizontal middle wall (38) parallel to the first extrusion direction (x1), wherein the horizontal middle wall (38) has first holes (44) for insertion of respective first screws (46) as fixing means for fixing the first piece (30) and the second piece (32) to each other.

4. Sliding roof according to claim 3, wherein said plurality of guide bearings (26, 28) comprise first vertical-axis guide bearings (26), and wherein said first guide bearings (26) are fixed to the body (24) by means of said first screws (46).

5. Sliding roof according to claim 3 or claim 4, wherein said plurality of guide bearings (26, 28) comprise second horizontal-axis guide bearings (28), wherein the outer side wall (42) has second holes (48) for insertion of respective second screws (50), and wherein said second guide bearings (28) are fixed to the body (24) by means of said second screws (50).

6. Sliding roof according to any of claims 3 to 5, wherein the second portion (36) is arranged adjacent to the inner side wall (40) of the first portion (34).

7. Sliding roof according to any of claims 3 to 6, wherein the second piece (32) of each carriage (18, 20) integrally forms a horizontal middle wall (52) resting on the horizontal middle wall (38) of the first piece (30), and at least one connection portion (54) which extends from the horizontal middle wall (52) and forms a respective hinge seat (56).

8. Sliding roof according to claim 7, further comprising a plurality of links (22) each provided with a pair of hinge pins (60) for hinged connection of each link (22) with the pair of adjacent carriages (18, 20), wherein the hinge seats (56) of each carriage (20) and the hinge pins (60) of each link (22) are configured so as to allow the hinge pins (60) to be released only in a given angular position of the hinge pins (60) different from those normally taken in use.

9. Sliding roof according to claim 8, wherein each hinge seat (56) has a slit (58) and wherein said slit (58) has an opening angle (α) smaller than 180 degrees and is oriented in such a manner that the bisecting line of the opening angle (α) is inclined by an acute angle towards the inside of the second piece (32) relative to the vertical direction.

10. Sliding roof according to claim 9, wherein each link (22) comprises a pair of rigid legs each forming at a first end thereof a respective hinge pin (60), and a resiliently deformable middle portion to which the second ends of the legs are connected, wherein each hinge pin (60) has a cross-section the outline of which is not wholly circular, but has a flat portion (62) and a step (64) joining the flat portion (62) to the remaining circular outline of the hinge pin (60), and wherein the flat portion (62) of each hinge pin (60) is oriented substantially parallel to the rigid leg of the link (22) forming said hinge pin.

## Patentansprüche

1. Schiebedach (10) insbesondere für Lastkraftwagen, Sattelanhänger/Sattelschlepper und dergleichen, umfassend ein Paar von Führungsabschnitten (12), die parallel zueinander angeordnet sind, um eine Schieberichtung (x) zu definieren, eine Mehrzahl von Querelementen (14, 16), die an den Führungsabschnitten (12) so angebracht sind, dass sie entlang der Schieberichtung (x) verschiebbar sind, und eine Abdeckung, die an den Querelementen (14, 16) befestigt ist, wobei an den gegenüberliegenden Enden von jedem Querelement (14, 16) ein Paar von Schlitten (18, 20) angeordnet sind, vermittels denen das Querelement (14, 16) entlang der Führungsabschnitte (12) geführt ist, wobei jeder Schlitten (18, 20) einen Körper (24) und eine Mehrzahl von Führungslagern (26, 28) umfasst, die durch den Körper (24) getragen werden,
**dadurch gekennzeichnet, dass** der Körper (24) von jedem Schlitten (18, 20) ein erstes Stück (30) aus einer extrudierten Aluminium-Legierung mit einer ersten Extrusionsrichtung (x1) umfasst, ein zweites Stück (32) aus einer extrudierten Aluminium-Legierung mit einer zweiten Extrusionsrichtung (x2) umfasst, und Befestigungsmittel (46) umfasst, um das erste Stück (30) und das zweite Stück (32) aneinander zu fixieren, und dadurch, dass das erste und das zweite Stück (30, 32) so angeordnet sind, dass die erste Extrusionsrichtung (x1) parallel zu der Schieberichtung (x) orientiert ist, während die zweite Extrusionsrichtung (x2) orthogonal zu der Schieberichtung (x) orientiert ist.

2. Schiebedach nach Anspruch 1, wobei das erste Stück (30) von jedem Schlitten (18, 20) integral einen ersten Abschnitt (34) bildet, der im Wesentlichen eine invertierte U-Form hat, und an welchem die Führungslager (26, 28) fixiert sind, und einen zweiten Abschnitt (36) bildet, der an einem Ende von dem jeweiligen Querelement (14, 16) fixiert ist.

3. Schiebedach nach Anspruch 2, wobei der erste Abschnitt (34) eine horizontale Mittelwand (38) und ein Paar von vertikalen Seitenwänden (40, 42) umfasst, das heißt, jeweils eine innere vertikale Seitenwand und eine äußere vertikale Seitenwand, die sich von gegenüberliegenden Seiten der horizontalen Mittelwand (38) nach unten parallel zu der ersten Extrusionsrichtung (x1) erstrecken, wobei die horizontale Mittelwand (38) erste Löcher (44) aufweist, um jeweilige erste Schrauben (46) als Befestigungsmittel einzusetzen, um das erste Stück (30) und das zweite Stück (32) aneinander zu fixieren.

4. Schiebedach nach Anspruch 3, wobei die Mehrzahl von Führungslagern (26, 28) erste, Vertikal-Achsen Führungslager (26) umfasst, und wobei die ersten Führungslager (26) an dem Körper (24) vermittels der ersten Schrauben (46) fixiert sind.

5. Schiebedach nach Anspruch 3 oder Anspruch 4, wobei die Mehrzahl von Führungslagern (26, 28) zweite, Horizontal-Achsen Führungslager (28) umfasst, wobei die äußere Seitenwand (42) zweite Löcher (48) aufweist, um jeweilige zweite Schrauben (50) einzusetzen, und wobei die zweiten Führungslager (28) an dem Körper (24) vermittels der zweiten Schrauben (50) fixiert sind.

6. Schiebedach nach einem der Ansprüche 3 bis 5, wobei der zweite Abschnitt (36) benachbart zu der inneren Seitenwand (40) des ersten Abschnitts (34) angeordnet ist.

7. Schiebedach nach einem der Ansprüche 3 bis 6, wobei das zweite Stück (32) von jedem Schlitten (18, 20) integral eine horizontale Mittelwand (52) bildet, die auf der horizontalen Mittelwand (38) von dem ersten Stück (30) ruht, und wenigstens einen Verbindungsabschnitt (54) bildet, der sich von der horizontalen Mittelwand (52) erstreckt und eine jeweilige Scharnieraufnahme (56) bildet.

8. Schiebedach nach Anspruch 7, weiter umfassend eine Mehrzahl von Gliedern (22), die jeweils mit einem Paar von Scharnierstiften (60) versehen sind, für eine Gelenkverbindung von jedem Glied (22) mit dem Paar von benachbarten Schlitten (18, 20), wobei die Scharnieraufnahmen (56) von jedem Schlitten (20) und die Scharnierstifte (60) von jedem Glied (22) so konfiguriert sind, dass es nur möglich ist, die Scharnierstifte (60) in einer gegebenen Winkelposition der Scharnierstifte (60) zu lösen, die verschieden von denjenigen ist, die normalerweise im Betrieb eingenommen werden.

9. Schiebedach nach Anspruch 8, wobei jede Scharnieraufnahme (56) einen Schlitz (58) aufweist, und wobei der Schlitz (58) einen Öffnungswinkel (α) kleiner als 180° aufweist und so orientiert ist, dass die Winkelhalbierende des Öffnungswinkels (α) unter einem spitzen Winkel zu der Innenseite von dem zweiten Stück (32) relativ zu der vertikalen Richtung geneigt ist.

10. Schiebedach nach Anspruch 9, wobei jedes Glied (22) ein Paar von starren Beinen aufweist, die jeweils an einem ersten Ende davon einen jeweiligen Scharnierstift (60) bilden, und einen elastisch verformbaren mittleren Abschnitt aufweist, mit welchem die zweiten Enden der Beine verbunden sind, wobei jeder Scharnierstift (60) einen Querschnitt aufweist, dessen Umriss nicht vollständig kreisförmig ist, sondern einen flachen Abschnitt (62) und eine Stufe (64) aufweist, welche den flachen Abschnitt (62) mit dem übrigen kreisförmigen Umriss von dem Scharnierstift (60) verbindet, und wobei der flache Abschnitt (62) von jedem Scharnierstift (60) im Wesentlichen parallel zu dem starren Bein von dem Glied (22) orientiert ist, welches den Scharnierstift bildet.

## Revendications

1. Toit coulissant (10), en particulier pour camions, semi-remorques et véhicules similaires, comprenant une paire de sections de guidage (12) disposées parallèles l'une à l'autre afin de définir une direction de coulissement (x), une pluralité d'éléments transversaux (14, 16) montés sur les sections de guidage (12) de manière à pouvoir coulisser le long de la direction de coulissement (x), et une bâche fixée aux éléments transversaux (14, 16), dans lequel, aux extrémités opposées de chaque élément transversal (14, 16), est attachée une paire de chariots (18, 20) au moyen desquels l'élément transversal (14, 16) est guidé le long des sections de guidage (12), dans lequel chaque chariot (18, 20) comprend un corps (24) et une pluralité de roulements de guidage (26, 28) portés par le corps (24),
**caractérisé en ce que** le corps (24) de chaque chariot (18, 20) comprend une première pièce (30) en alliage d'aluminium extrudé ayant une première direction d'extrusion (x1), une deuxième pièce (32) en alliage d'aluminium extrudé ayant une deuxième direction d'extrusion (x2) et un moyen de fixation (46) pour fixer la première pièce (30) et la deuxième pièce (32) entre elles, et **en ce que** les première et deuxième pièces (30, 32) sont agencées de telle manière que la première direction d'extrusion (x1) est orientée parallèlement à la direction de coulissement (x), tandis que la deuxième direction d'extrusion (x2) est orientée perpendiculairement à la direction de coulissement (x).

2. Toit coulissant selon la revendication 1, dans lequel la première pièce (30) de chaque chariot (18, 20) forme intégralement une première partie (34) qui a substantiellement une forme de U inversé et sur laquelle sont fixés les roulements de guidage (26, 28), et une deuxième partie (36) qui est fixée à une extrémité de l'élément transversal respectif (14, 16).

3. Toit coulissant selon la revendication 2, dans lequel la première partie (34) comprend une paroi médiane horizontale (38) et une paire de parois latérales verticales (40, 42), c'est-à-dire respectivement une paroi latérale verticale intérieure et une paroi latérale verticale extérieure qui s'étendent vers le bas depuis des côtés opposés de la paroi médiane horizontale (38) parallèles à la première direction d'extrusion (x1), dans lequel la paroi médiane horizontale (38) comporte des premiers trous (44) pour l'insertion de premières vis respectives (46) comme moyen de fixation pour fixer la première pièce (30) et la deuxième pièce (32) entre elles.

4. Toit coulissant selon la revendication 3, dans lequel lesdits roulements de guidage (26, 28) comprennent des premiers roulements de guidage à axe vertical (26), et dans lequel lesdits premiers roulements de guidage (26) sont fixés sur le corps (24) au moyen desdites premières vis (46).

5. Toit coulissant selon la revendication 3 ou 4, dans lequel lesdits roulements de guidage (26, 28) comprennent des deuxièmes roulements de guidage à axe horizontal (28), dans lequel la paroi latérale extérieure (42) comporte des deuxièmes trous (48) pour l'insertion de deuxièmes vis respectives (50), et dans lequel lesdits deuxièmes roulements de guidage (28) sont fixés sur le corps (24) au moyen desdites deuxièmes vis (50).

6. Toit coulissant selon l'une quelconque des revendication 3 à 5, dans lequel la deuxième partie (36) est adjacente à la paroi latérale intérieure (40) de la première partie (34).

7. Toit coulissant selon l'une quelconque des revendication 3 à 6, dans lequel la deuxième pièce (32) de chaque chariot (18, 20) forme intégralement une paroi médiane horizontale (52) qui repose sur la paroi médiane horizontale (38) de la première pièce (30), et au moins une partie de connexion (54) qui s'étend depuis la paroi médiane horizontale (52) et forme un siège de charnière respectif (56).

8. Toit coulissant selon la revendication 7, comprenant en outre une pluralité de liaisons (22) pourvues chacune d'une paire d'axes de charnière (60) pour permettre la connexion articulée de chaque liaison (22) avec la paire de chariots adjacente (18, 20), dans lequel les sièges de charnière (56) de chaque chariot (20) et les axes de charnière (60) de chaque liaison (22) sont configurés de façon à ne permettre la libération des axes de charnière (60) que dans une position angulaire donnée des axes de charnière (60), différente de celles normalement prises en utilisation.

9. Toit coulissant selon la revendication 8, dans lequel chaque siège de charnière (56) comporte une fente (58) et dans lequel ladite fente (58) a un angle d'ouverture (α) inférieur à 180 degrés et est orientée de telle manière que la bissectrice de l'angle d'ouverture (α) est inclinée en formant un angle aigu vers l'intérieur de la deuxième pièce (32) par rapport à la direction verticale.

10. Toit coulissant selon la revendication 9, dans lequel chaque liaison (22) comprend une paire de jambes rigides formant chacune à une première extrémité de celle-ci un axe de charnière respectif (60), et une partie médiane déformable de façon résiliente à laquelle sont connectées les deuxièmes extrémités des jambes, dans lequel chaque axe de charnière (60) a une section transversale dont le profil n'est pas pleinement circulaire mais comporte une partie plate (62) et un épaulement (64) reliant la partie plate (62) au contour circulaire restant de l'axe de charnière (60), et dans lequel la partie plate (62) de chaque axe de charnière (60) est orienté substantiellement parallèlement à la jambe rigide de la liaison (22) formant ledit axe de charnière.
